# EUROPEAN PATENT APPLICATION

(11) **EP 0 752 659 A1**
(43) Date of publication of application: **08.01.1997**
(21) Application number: 96304985.3
(22) Date of filing: 05.07.1996
(51) Int. Cl.: G06F 12/08

(54) **Apparatus and method for accessing a cache memory having partial tags**

(30) Priority: 06.07.1995 US 498949
(71) Applicant: SUN MICROSYSTEMS, INC., Mountain View, CA 94043 (US)
(72) Inventor: Petrolino, Joseph A., Jr., Palo Alto, California 94306 (US)
(74) Representative: Johnson, Terence Leslie

(57) **Abstract**

A computer having a cache is disclosed. The computer includes an n-way associative cache 40 including a set. The set includes n blocks 25, each of the n blocks 25 including a DATA field for storing a data element and a TAG field for storing a partial tag associated with the data element. The computer also includes a cache manager configured to prevent two address locations in the set to have identical partial tags. During operation, an execution unit of the computer may initiate a cache access for an address location. If a cache hit occurs, the address location is accessed from the cache.

On the other hand, if a cache miss occurs, the main memory is accessed and the address location is provided to both the execution unit that requested the address location and the cache. The cache manager, which is logically located between the main memory and the cache, implements a cache replacement policy. In the event the partial tag of the fetched address location does not match one of the partial tags of the address locations stored in the indexed set, a replacement element in the cache manager selects for replacement a data element in the set in accordance with a well known cache replacement policy. On the other hand, in the event of a partial tag match, the replacement element in the cache manager replaces the address location with the matching tag with the fetched address location. In this manner, it is not possible for two address locations with the same partial tags to exist in the set of the cache. The possibility of two partial tag/key hits occurring with a single cache access and the need for R bits is therefore eliminated.

## Description

The present invention relates to computers, and more particularly to an apparatus and method for increasing the access speed of cache memory.

Many microprocessor based computers rely on separate data and instruction caches for storing data and instructions in close proximity to the execution units of the microprocessor. The cache is critical to the performance of the computer, since the microprocessor is often idle during the interim period between the request and receipt of data or instructions from a cache. If the access time of the cache is relatively slow, the throughput of the microprocessor is adversely affected. Computer designers are therefore continually striving to increase the access speed of caches. Several types of architectures are known for cache memories, including direct mapped, fully associative, and set associative. Direct mapped caches typically have relatively low hit rates. Fully associative caches are relatively complex and difficult to implement. As a result, the set associative cache is the is the most commonly used architecture for implementing data and instruction caches.

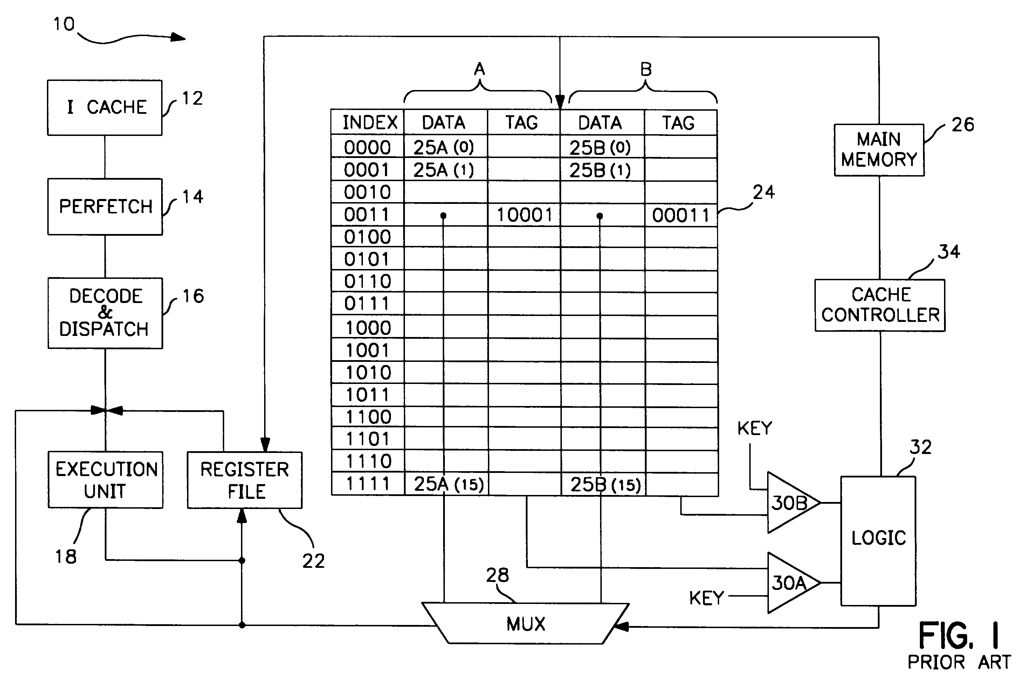

Referring to Figure 1, a block diagram of a prior art computer is shown. The computer 10 includes an instruction cache 12, a prefetch unit 14, a decode and dispatch unit 16, and execution units 18. The computer 10 also has a memory hierarchy which includes, a register file 22, an n-way associative data cache 24 and the instruction cache 12, main memory 26, and disk storage (not shown). Also included in the computer 10 is multiplexor (MUX) 28, comparators 30A through 30n, logic 32, and a cache controller 34. During operation, the prefetch unit 14 fetches instructions from the instruction cache 12. The decode and dispatch unit 16 decodes the fetched instructions, and dispatches them to the execution units 18. On occasion, a dispatched instruction needs one or more data values from the data cache 24. The execution unit 18 executing the instruction initiates a fetch operation to obtain a needed data value. If a cache hit occurs, the data value is provided by the cache. If a miss occurs, then the data value is provided from another level of memory, such as main memory memory 26 or disk memory. If an instruction causes a data value to be recomputed during execution, the recomputed data value is written back to a register in the register file 22.

To describe the cache access procedure, an example is provided. Consider the data cache 24 to be a two-way (n=2) set associative cache, including way A and way B. Each way includes sixteen blocks 25₀-25₁₅. The blocks of way A and way B are grouped together into sixteen sets, each set indexed by bits (0000), (0001), (0010) ... (1111) respectively. Each block 25 includes a DATA field for storing data, and a TAG field for storing a tag associated with the data in each block. It should be noted that the two way associativity of the cache 24 is only exemplary, and that caches with greater associativity are known in the prior art.

The main memory 26 includes five hundred and twelve memory locations. The address for each location is nine bits (i.e., 2⁹ = 512). Each nine bit address includes an index portion and a tag portion. An example of an address location is provided in the Table I below.

**Table I**

| Tag | Index |
|---|---|
| 0 1101 | 0110 |
| MSBs | LSBs |

With five hundred and twelve address locations in main memory 26, there are thirty two address locations with an index of (0000), thirty two address locations with an index of (0001), thirty two address locations with an index of (0010), ... and thirty two address locations with an index of (1111) respectively.

The index portion of each address location in main memory 26 is used for mapping the address location into the set having the same index in the cache 24. For example, the thirty two locations having an index of (0000) are indexed into the set (0000), the thirty two address locations having an index of (0001) are indexed into the set (0001), and so on for each index (0010) through (1111) respectively. In other words, if two of the thirty two address locations sharing the same index are in the cache 24, there are thirty other address locations with the same index remaining in main memory 26. It should be noted that when an address location is fetched from main memory 26 and placed in the cache 24, it may be stored in either way A or way B. The placement is typically dictated by a predetermined cache replacement policy, such as least recently used, first-in-first-out, or a random replacement.

When an address location is in the cache 24, the tag portion of the address location is stored in the TAG field. For example, if the address location (1 0001 0011) is stored in way A of the cache, then the tag (1 0001) is stored in the TAG field of the block 25A₃. Similarly, if the addressable location (0 0011 0011) is stored in way B, then tag (0 0011) is stored in the TAG field of the block 25B₃.

To best describe the operation of how address locations are fetched from the cache 24 and main memory 26, three examples are provided below.

### Example 1:

Consider a situation where an attempt to fetch address location (0 0011 0011) from the cache is made. In determining if this address location is in the cache, the following four steps are performed; (1) the blocks 25A₃ and 25B₃ are accessed. These blocks are accessed by matching the index of the requested address location (0011) with the matching indexed set (0011) in the cache 24; (2) the tags in the two accessed blocks are then provided to the input of comparators 30A and 30B respectively. Comparator 30A compares the MSBs (0 0001) of the requested address location, sometimes referred to as the key, with the tag (1 0001) in block 25A₃. Since the two inputs are different, the output of comparator 30A is false. Comparator 30B also compares the key (0 0011) and the tag (0 0011) stored in block 25B₃. Since the two are identical, the output of comparator 30B is true; (3) Logic 32, in response to the true signal, generates a "B" select signal for the MUX 28; and (4) the MUX selects the B input, and provides the data stored in the DATA field of block 25B₃ to the the execution units 18 and/or register file 22.

### Example 2:

In the second example, the address location (1 0001 0011) is requested. Using the same steps as described above, the output at comparator 30A is true because the key (1 0001) and the tag (1 0001) stored in block 25A₃ are identical. As a result, the logic 32 generates an "A" select signal for the MUX 28, and the data stored in the DATA field of block 25A₃ is provided to the execution units 18 and/or register file 22.

### Example 3:

In the third example, the address location (1 1111 0011) is requested. In the same steps as described above, the tag (1 0001) stored in block 25A₃ is provided to comparator 30A, and the tag (0 0011) stored in block 25B₃ is provided to comparator 30B. The two tags are then compared with the key (11111) of the requested address. Since both tags do not match the key, the logic 32 informs the cache controller 34 that a cache "miss" has occurred. In response, the cache controller 34 initiates a fetch request, and the address location (1 1111 0011) is accessed from main memory 26 and inserted into the cache 24, and is also directly provided to the execution units 18 and/or register file 22.

The tag/key comparison described above is called "matching". Matching is used to: (1) generate a select input for the MUX 28; and (2) determine if a cache miss has occurred. In thirty two and sixty four bit microprocessors, matching has become problematic because the number of bits in the key and tag are very large. For example, in a sixty four bit microprocessor with a sixty four Kbyte data cache, the tag and the key may be up to fifty bits wide. Worst case, this translates into a matching function involving approximately one hundred bits (50 + 50 = 100). Such a "brute force" comparison is time consuming, which prolongs the cache access time. Furthermore, the circuitry required to perform the hundred bit comparison is complex, and occupies a large area on the semiconductor die. The Applicant is aware of one cache access technique that attempts to improve upon the above described brute force matching process.

In *"Cache Design with Partial Address Marching"* Proceedings of the 27th Annual International Symposium on Microarchitecture, 1994, by Lishing Liu, a partial tag/key matching technique is disclosed for speeding up data acquisition in a set-associative cache. Liu proposes an initial acquisition of data based on a partial tag/key comparison, followed by a complete tag/key comparison for the purpose of verifying the validity of the acquired data. Since the first acquisition of data is based on a partial comparison involving fewer bits, the first acquisition occurs faster than otherwise possible with a full tag/key comparison. The problem with partial address matching scheme as taught by Liu is that it is possible for two or more different address locations having the same partial tags to be simultaneously stored in the same set of the cache. In other words, it is possible for more than one cache "hit"to occur with one data access request. To resolve this problem, Liu uses an "R" bit in the TAG field of each block 25 in the cache. When two address locations having the same partial tags exist in the same set, the R-bit is set for the most recently used among the two address locations. The R bit for the other address location is reset. A MUX, which is used to select one input from the blocks 25 of an index set, is programmed to select only the data input having its R bit set. Accordingly, if two cache hits occur, the MUX in Liu will select only the most recently used data. If the subsequent complete tag/key comparison proves that the first partial tag/key comparison was correct, then the execution of the instruction that caused the fetch continues as normal. On the other hand, if the subsequent full key/tag comparison determines that the cache access based on the partial comparison was incorrect, then the previously reset bit R is set, and the previously set bit is reset, and the correct data is accessed from either the cache 24 or main memory 26.

The use of R bits in Liu are cumbersome. Additional logic is needed to maintain the status of the R bits and to perform an update of the R bits as needed. In the event a partial tag/key comparison indicates a cache hit has occurred, but the full tag/key comparison indicates that a cache miss has occurred, the R bits in the TAG field of the blocks 25 in the accessed set must be updated. This additional logic complicates the circuitry required to implement the cache structure, and occupies a relatively large space on the semiconductor die containing the cache.

The present invention therefore relates to an apparatus and method for improving the access speed of a cache in a computer. The computer includes an n-way associative cache including a set. The set includes n blocks, each of the n blocks including a DATA field for storing a data element and a TAG field for storing a partial tag associated with the data element. The computer also includes a cache manager configured to prevent two address locations in the set to have identical partial tags. During operation, an execution unit of the computer may initiate a cache access for an address location. If a cache hit occurs, the address location is accessed from the cache. On the other hand, if a cache miss occurs, the main memory is accessed and the address location is provided to both the execution unit that requested the address location and the cache. The cache manager, which is logically located between the main memory and the cache, implements a cache replacement policy. In the event the partial tag of the fetched address location does not match one of the partial tags of the address locations stored in the indexed set, a replacement element in the cache manager selects for replacement a data element in the set in accordance with a well known cache replacement policy. On the other hand, in the event of a partial tag match, the replacement element in the cache manager replaces the address location with the matching tag with the fetched address location. In this manner, it is not possible for two address locations with the same partial tags to exist in the set of the cache. The possibility of two partial tag/key hits occurring with a single cache access and the need for R bits is therefore eliminated.

### BRIEF DESCRIPTION OF THE DRAWINGS

The present invention will be apparent from the following description in which:
**Figure 1** illustrates a block diagram of a computer according to the prior art.,
**Figure 2A** illustrates a diagram of the partial tag/key comparator used by the associative cache of the present invention; and
**Figure 2B** illustrates a diagram of the full tag/key comparator used by the associative cache of the present invention.

### DESCRIPTION OF THE PREFERRED EMBODIMENT

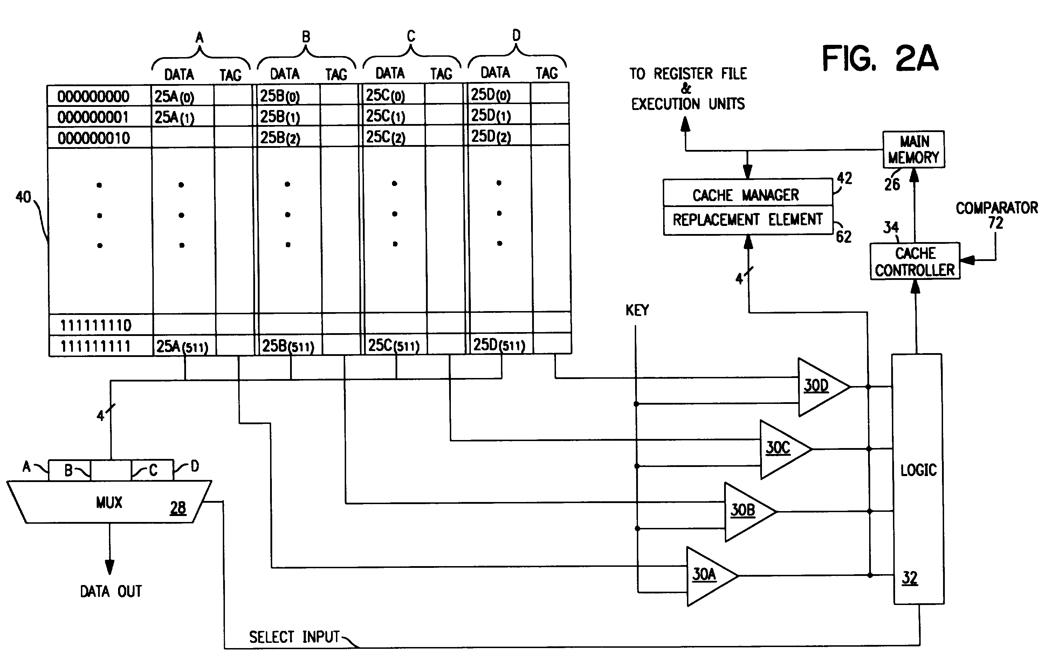

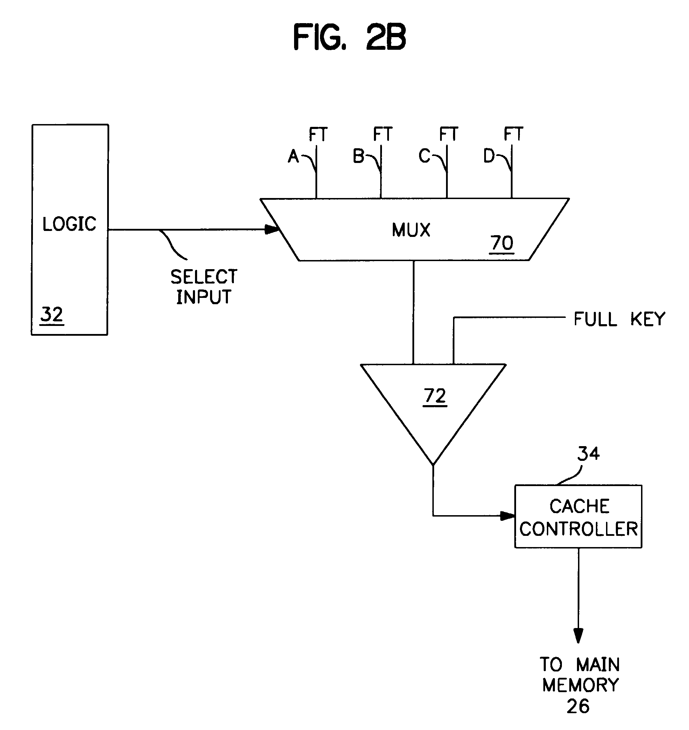

Referring to Figure 2A, a block diagram of a cache and its related partial tag/key comparison logic according to the present invention is shown. The block diagram includes a cache 40, a cache manager 42 including a replacement element 62, main memory 26, a four input MUX 28, four comparators 30A through 30D, logic 32, and a cache controller 34. Elements designated by the same reference numerals as provided in Figure 1 perform the same or similar function herein, and therefore are not described in detail with respect to Figure 2A. Referring to Figure 2B, a diagram of the full tag/key comparator logic of the present invention is shown. The full tag/key comparator logic includes a MUX 70, and a full tag/key comparator 72.

In one embodiment, the cache 40 is a sixty four Kbyte data cache on a microprocessor chip with a sixty four bit address space. The cache 40 is a four way (n=4) set associative cache. Each way A, B, C, and D includes five hundred and twelve blocks 25₀ through 25₅₁₁. Each block includes a DATA field and a TAG field. The DATA field in each block 25 stores thirty two bytes of data. The TAG field stores a fifty bit tag including an eight bit partial tag. Each set is indexed by nine of the low order bits (i.e., 2⁹ = 512) of each address location. The first set is indexed by (0 0000 0000), the second set is indexed by (0 0000 0001), ... and the five hundred and twelfth set is indexed by (1 1111 1111). Accordingly, among the sixty four bits per address location, nine bits are used for the index, fifty bits are used for the tag and five bits are used for selecting a byte among the thirty-two bytes per block. Eight of the low order bits among the fifty tag bits are used for the partial tag.

The present invention relies on an initial acquisition of an address location from the cache 40 based on a partial tag/key comparison, followed by a complete tag/key comparison for the purpose of verifying the validity of the accessed address location. The operation of the partial tag/key comparison, the full tag/key comparison, and the cache replacement policy of the present invention are now described.

### 1. Partial Tag/Key Comparison

Referring to Figure 2A, when a cache request is made, the four blocks 25A through 25D of the set having an index matching that of the requested address location are accessed. The comparators 30A through 30D compare the partial tags stored in the four TAG fields of blocks 25A through 25 D of the indexed set with the partial key of the requested address location respectively. If a match occurs, indicating a cache "hit", the logic 32 generates the appropriate select input for the MUX 28, and the corresponding data input is selected. The selected data input is then provided to the execution unit 18 and/or the register file 22

### 2. Full Tag/Key Comparison

Referring to Figure 2B, the MUX 70 receives at its data inputs the full tags ("FT") from way A, way B, way C and way D respectively. The select signal generated by logic 32 is also used to select the full tag that corresponds to the selected partial tag. For example, if the output of comparator 30C is true, then the select signal from the logic 32 directs the MUX 70 to select the full tag from way C. The full comparator 72 then performs a full comparison of the selected tag with the full key of the requested address location. The partial tag/key hit is confirmed if the comparator 72 determines that the full tag and full key are the same. With a confirmation, the instruction that initiated the cache access progresses through the execution units 18 without interruption. On the other hand, a cache miss occurs if the comparator 72 indicates that the full tag and full key are different. The instruction that needed the requested data is then halted in the execution unit 18 and reissued when the correct data is received from main memory 26.

In an alternative embodiment, the MUX 70 can be replaced with four full comparators 72. Each one of the four comparators 72 receives the full key and the full tag from way A, way B, way C, and way D respectively. This approach provides a relatively faster determination if a cache hit or miss has occurred. The disadvantage of this approach is that four large comparators, each occupying a relatively large area on the die, are needed.

### 3. Cache Prelacement Policy

When the output of the comparator 72 indicates that a cache miss has occurred, the cache controller 34 initiates a fetch operation to fetch the requested address location from main memory 26. In response, the main memory 26 provides the fetched address location directly to the execution units 18 and/or register file 22.

The cache manager 42, which is logically coupled between the main memory 26 and the cache 40, is coupled to receive the fetched address location from main memory and the output from the four partial comparators 30A through 30B. If the partial comparison indicates that none of the partial tags of the set match the partial tag of the fetched address location, then the cache manager 42 directs the replacement element 62 to victimize one of the four address locations in the set in accordance with a predetermined cache replacement policy, such as least recently used, first-in-first-out, random, etc.. On the other hand, if the partial comparison yields a match of the partial key of the fetched address location with one of the four partial tags, then the cache manager 42 directs the replacement element 62 to automatically victimize the address location in the indexed set having the matching partial tag. The fetched address location is then inserted into the block containing the matching partial tag. In this manner, two identical partial tags can never co-exist among the blocks of a particular set. The possibility of two partial cache hits occurring with a single request is therefore avoided.

The cache replacement policy described in the present application provides many benefits over the prior art. The present invention realizes the benefit of fast cache access times because the matching function involves a relatively few number of bits. It guarantees that two partial cache hits can not occur for a single cache access in the present invention. The need to use R bits and logic to update the R bits is therefore eliminated. Lastly, the cache manager 42, which is coupled between the main memory 26 and the cache 40, is not in the critical path between the execution units 18 and the cache 40. Rather, when a cache miss occurs, the requested address location is directly transferred from the memory 26 to the execution units 18 and/or the register file 22.

Although the present invention was described with respect to a specific embodiment, other alternatives, embodiments and modifications will be apparent to those skilled in the art. For example, the present invention may be used with any sized set associative cache, regardless of the number of ways or the number of sets per way. The present invention may also be used with a fully associative cache architecture. The present invention may be used with both data and instruction caches, as well as for translation look-aside buffers (TLBs). The size of the partial tag and key may also vary. The present invention may also be used with any type of processor, including RISC, CISC or VLIW. Lastly, the cache manager 42 and the replacement element 62 may be implemented using hardware, software, firmware, or a combination thereof. It is intended that the specification be only exemplary, and that the true scope and spirit of the invention be indicated by the following claims.

## Claims

1. A computer having a memory for storing a plurality of address-locations and an associative cache for storing selected ones of the plurality of the address locations in the memory, the associative cache including a set, the set including n blocks, each of the n blocks including a tag field for storing a partial tag associated with one of the plurality of address locations in memory, the computer comprising:
a cache manager configured to prevent two address locations having identical partial tags to co-exist in the set.

2. The computer of claim 1, wherein the associative cache is a fully associative cache.

3. The computer of claim 1, wherein the associative cache is a set associative cache including a plurality of indexed sets, each one of the indexed sets including n of the blocks.

4. The computer of claim 1, further comprising an access element configured to initiate an access for a requested address location in the associative cache.

5. The computer of claim 4, further comprising a cache miss element configured to determine if the requested address location is not in the associative cache.

6. The computer of claim 5, further comprising a fetch element configured to fetch the requested address location from the memory when the cache miss element indicates that the requested address location is not in the associative cache.

7. The computer of claim 1, wherein the cache manager includes a comparison element configured to compare a parual key associated with a requested address location fetched from the memory and the partial tags associated with the n address locations in the n blocks of the set in the associative cache.

8. The computer of claim 7, wherein the cache manager further comprising a replacement element configured to replace a victim address location among the n address locations in the set with the requested address location in the event the comparison element determines that the partial key of the requested address location and the partial tag of the victim address location are the same.

9. The computer of claim 7, wherein in the event the partial key of the requested address location and the partial tags of all of the n address locations in the set are not the same, the cache manager is further configured to select a victim address location among the n address locations in the n blocks of the set in accordance with a predetermined cache replacement policy.

10. The computer of claim 9, wherein the predetermined cache replacement policy used to select the victim address location includes one among the following group of replacement policies, including: least recently used, first-in-first-out, and random replacement.

11. The computer of claim 1, wherein the associative cache is a data cache coupled between an execution unit and main memory of the computer.

12. The computer of claim 11, wherein the cache manager is logically located between the data cache and the main memory.

13. The computer of claim 1, wherein the associative cache is an instruction cache.

14. The computer of claim 1, wherein the associative cache and the cache manager are located on a semiconductor die containing a microprocessor.

15. The computer of claim 12, wherein the microprocessor containing the associative cache is housed within the computer.

16. The computer of claim 1, wherein the associative cache is used for a translation look-aside buffer in the memory.

17. The computer of claim 1, wherein the cache manager is substantially implemented in circuitry located on a semiconductor die.

18. The computer of claim 1, wherein the cache manager is substantially implemented in software.

19. The computer of claim 1, wherein the cache manager is substantially implemented in firmware.

20. The computer of claim 1, further comprising n partial tag/key comparators to compare a partial key associated with a specific address location requested from the associative cache with the partial tags associated with the address locations in the set.

21. The computer of claim 20, further comprising a first MUX coupled to receive n data inputs corresponding to the n data blocks in the set and a select element configured to generate a select signal for the MUX in response to the n partial tag/key comparators.

22. The computer of claim 21, further comprising a second MUX coupled to receive n full tags corresponding to the n address locations stored in the n blocks of the set of the associative cache, the second MUX further configured to select one of the n full tags in response to the select signal generated by the select element.

23. The computer of claim 22, further comprising a full tag/key comparator coupled to compare the selected one of the n full tags and a full key associated with the specific address location.

24. A method of providing a computer having a memory for storing a plurality of address locations and an associative cache for storing selected ones of the plurality of the address locations in the memory, the associative cache including a set, the set including n blocks, each of the n blocks including a tag field for storing a partial tag associated with one of the plurality of address locations in memory, the method comprising the steps of:
providing a cache manager configured to prevent two address locations having identical partial tags to co-exist in the set.

25. The method of claim 24, wherein the provided associative cache is a fully associative cache.

26. The method of claim 24, wherein the provided associative cache is a set associative cache including a plurality of indexed sets, each one of the indexed sets including n of the blocks.

27. The method of claim 24, further comprising the step of providing a comparison element configured to compare a partial key associated with a requested address location fetched from the memory and the partial tags associated with the n address locations in the n blocks of the set in the associative cache.

28. The computer of claim 27, further comprising the step of providing a replacement element configured to replace a victim address location among the n address locations in the set with the requested address location in the event the comparison element determines that the partial key of the requested address location and the partial tag of the victim address location are the same.

29. The computer of claim 27, wherein in the event the partial key of the requested address location and the partial tags of all of the n address locations in the set are not the same, the provided cache manager is further configured to select a victim address location among the n address locations in the n blocks of the set in accordance with a predetermined cache replacement policy.

30. A method of operating a computer having a memory for storing a plurality of address locations and an associative cache for storing selected ones of the plurality of the address locations in the memory, the associative cache including a set, the set including n blocks, each of the n blocks including a tag field for storing a partial tag associated with one of the plurality of address locations in memory, the method comprising the steps of:
preventing two address locations having identical partial tags to co-exist in the set.

31. The method of claim 30, further comprising the step of comparing the partial key associated with a requested address location fetched from the memory and the partial tags associated with the n address locations in the n blocks of the set in the associative cache.

32. The computer of claim 31, further comprising the step of replacing a victim address location among the n address locations in the set with the requested address location in the event the comparison element determines that the partial key of the requested address location and the partial tag of the victim address location are the same.

33. The computer of claim 31, further comprising the step of selecting a victim address location among the n address locations in the n blocks of the set in accordance with a predetermined cache replacement policy in the event the partial key of the requested address location and the partial tags of all of the n address locations in the set are not the same.
